(19) **Europäisches Patentamt**

**European Patent Office**

**Office européen des brevets**

(11) **EP 0 836 332 B1**

(12) **EUROPÄISCHE PATENTSCHRIFT**

(45) Veröffentlichungstag und Bekanntmachung des Hinweises auf die Patenterteilung:
**05.02.2003 Patentblatt 2003/06**

(51) Int Cl.7: **H04N 13/04**

(21) Anmeldenummer: **97117127.7**

(22) Anmeldetag: **02.10.1997**

(54) **Positionsadaptiver, autostereoskoper Monitor (PAM)**

Position-adaptive, autostereoscopic monitor (PAM)

Moniteur autostéréoscopique, adaptant la position d'un observateur (PAM)

(84) Benannte Vertragsstaaten:
**BE CH ES FR GB IT LI LU NL**

(30) Priorität: **09.10.1996 DE 19640936**

(43) Veröffentlichungstag der Anmeldung:
**15.04.1998 Patentblatt 1998/16**

(73) Patentinhaber: **Hentschke, Siegbert, Prof. Dr.
34121 Kassel (DE)**

(72) Erfinder: **Hentschke, Siegbert, Prof. Dr.
34121 Kassel (DE)**

(74) Vertreter:
**Freiherr von Schorlemer, Reinfried, Dipl.-Phys.
Karthäuser Strasse 5A
34117 Kassel (DE)**

(56) Entgegenhaltungen:
**EP-A- 0 659 324          EP-A- 0 729 054
DE-C- 19 500 315**

## Beschreibung

Die Erfindung betrifft ein Verfahren und eine Vorrichtung zur autostereoskopen Darstellung von 3D-Bildern oder Szenen, bei denen die Position des Betrachters adaptiv in die stereoskope Ansicht einbezogen werden kann. Insbesondere ist sie für die Mikrochirurgie oder Computertomographie in der Medizintechnik geeignet, bei der es darauf ankommt, auch die dritte Dimension der Tiefe ohne störende Hilfsmittel wahrnehmen zu können, so daß zu betrachtende oder zu behandelnde Teile vor und hinter dem Bildschirm erscheinen können. Verbunden mit der 3D-Darstellung ist eine zweikanalige Übertragung oder Aufbereitung, die dem Betrachter die unterschiedlichen Perspektiven für das rechte und linke Auge über ein kombiniertes System aus einem positionsadaptiven autostereoskopen digitalen Monitor, einem Computer und einem Positionsdetektor vermittelt. Dabei soll die volle stereoskope Sicht für eine Person an allen Positionen des Betrachters ohne mechanische Verstellungen fortwährend adaptiert werden können. Betroffen sein kann auch ein zukünftiges 3D-Fernsehgerät, sobald eine zweikanalige Videoaufbereitung und -übertragung die 3D-Darstellung ermöglicht. Dabei kann eine An- und Abschaltung des 3D-Effektes vorgesehen werden.

**STAND DER TECHNIK:** Stereoskope Film- und Projektionsverfahren sind seit Jahren im Einsatz. Meist wird polarisiertes Licht (horizontal/vertikal, zirkular) benutzt, um das rechte und linke Bild zu trennen [10]. Mit dem Fortschritt der LCD-Technik wurde es möglich, die Lichtdurchlässigkeit von Kristallen elektronisch zu steuern. Dies machte die Entwicklung der Shutter-Technik möglich, bei der synchron mit der Halbbildfrequenz abwechselnd das rechte und das linke Brillenglas lichtundurchlässig wird und synchron dazu rechte und linke Bilder sequentiell auf dem Bildschirm erscheinen[4].

Autostereoskope Projektionen werden mit Hilfe von Leinwänden mit Streifenlinsenraster bei mehreren Projektionsrichtungen durchgeführt. Dabei wird der entsprechenden Richtung das richtige Perspektivbild zugeordnet [2]. Ein fließender Übergang von einer Perspektive zur nächsten ist dabei kaum zu erreichen, da die Anzahl der Projektionsrichtungen nicht beliebig erhöht werden kann. Bei einem autostereoskopen Display, das für nur eine Person bestimmt ist, verwendet man nur zwei Perspektiven, die eine bestimmte Blickrichtung erfordern [3], [7]. Ein voll stereoskopes Bild wie in einem Hologramm darzustellen, wird erreicht unter Verwendung von "Head Tracking"-Sensoren, die einerseits einen leistungsstarken Echtzeitrechner steuern zur Berechnung der passenden stereoskopen Bildperspektiven und andererseits den autostereoskopen Schirm steuern zur mechanischen Nachführung der Linsenrasterscheibe. Hierbei wird die genaue Kopfposition und -bewegung detektiert und die zugehörigen Bilder werden gleichzeitig generiert. Darüberhinaus kommen auch aufwendige VR-Systeme (Virtual Reality) unter Benutzung gewöhnungsbedürftiger "Head Mounted Displays" zum Einsatz.

In der Medizintechnik sind Kernspinresonanz und Computertomographie die wichtigsten Einsatzgebiete für stereoskope 3D-Visualisierungen. Um bestimmte gesuchte Perspektiven zu berechnen, werden leistungsfähige Spezialrechner für "Volume Tracing Algorithms" entwickelt [5]. Kombinierte Computervisualisierungen und Echtzeitübertragungen von Endoskopen werden zu einem der wichtigsten neurochirurgischen Werkzeuge. Stereoskope Endoskope sind bereits im Einsatz. Eine elektronische Bewegungssteuerung über einen auf Infrarotbasis arbeitenden "Head Trakking Sensor" wird leicht zu kombinieren sein mit einem personenbezogenen autostereoskopen Bildschirmsystem.

Prototypen autostereoskoper Bildwiedergabesysteme werden derzeit vielerorts entwikkelt. Die meisten benötigen hochpräzise mechanische Teile für die Bewegungsnachführung bei Positionsveränderungen des Betrachters [12]. Es sind aber auch elektronisch adaptive Shuttersysteme bekannt, die zwei Displays benötigen [11].

**PROBLEMSTELLUNG:** Um eine möglichst natürliche stereoskope Darstellung zu - erzeugen, muß eine autostereoskope Methode eingesetzt werden. Dabei darf der Betrachter nicht an eine bestimmte Position vor dem Bildschirm gebunden sein, sondern sollte gezielt das Mittel der Kopfbewegung benutzen können, um eine 3D-Szene aktiv aus geringfügig veränderten Blickrichtungen beobachten zu können. Dies erfordert ein adaptives System, das sich natürlich nur an einem Betrachter orientieren kann. Daneben sollte ein solches System für einen breiteren Einsatz des Bildschirmes auch die Möglichkeit bieten, sich auf einen nicht stereoskopen Darstellungsmodus umschalten zu lassen.

Eine weitere Problemstellung ist, die in den meisten adaptiven autostereoskopen Schirmen bislang erforderliche Mikromechanik für die Linsenrasterscheibe durch eine rein elektronische, wartungsfreie und störungssicherere Lösung zu ersetzen. Dabei soll die Möglichkeit eröffnet werden, relativ hohe Herstellungskosten durch hohe Stückzahlen drastisch zu reduzieren durch eine große Applikationsbreite. Es soll auch vermieden werden, zwei übereinander liegende Displays einsetzen zu müssen, wie es beispielsweise im Shuttersystem [11] erforderlich ist.

Es sind bislang keine elektronisch adaptive autostereoskope Monitore bekannt, die durch Aufrüstung herkömmlicher Bildschirme, Displays oder Projektionsflächen mit kommerziell verfügbaren Komponenten entstehen, ohne ein weiteres Display zu benötigen. Diese Problematik soll hier gelöst werden.

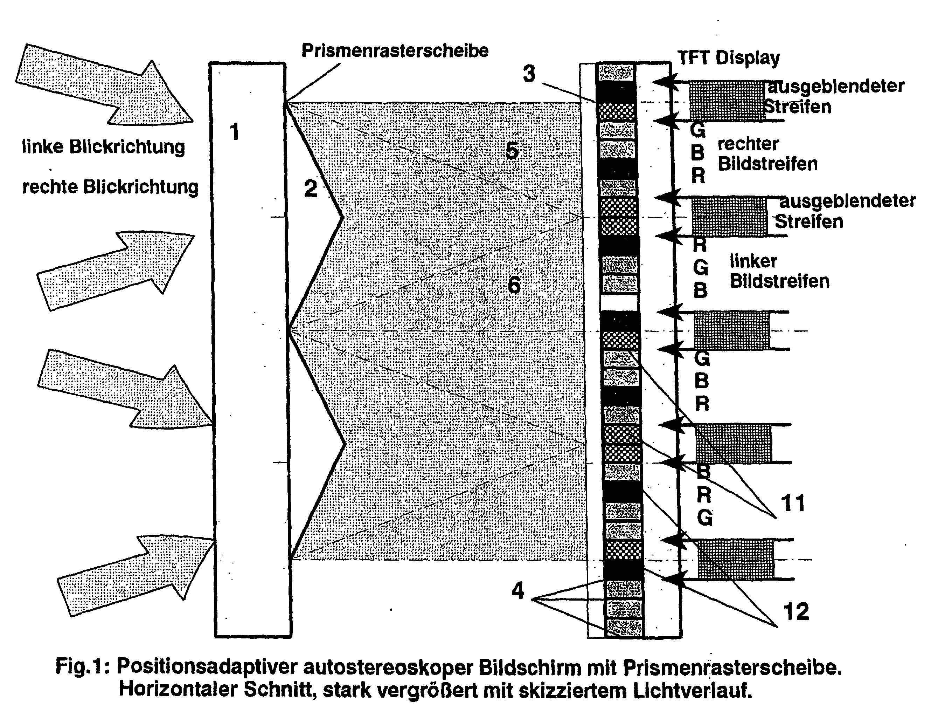

**PRINZIP DER ERFINDUNG:** Das Prinzip des Positionsadaptiven Autostereoskopen Monitors besteht darin, daß vor einem herkömmlichen Farbbildschirm (Display oder Bildrückprojektionsfläche), bei dem (der) die einzelnen Farbsubpixel (z.B. Rot, Grün, Blau) der Bildpunkte nebeneinander liegen, eine Prismenrasterscheibe (vgl. 1, 2 in Fig. 1) fest montiert wird und die einzelnen Bildpunkte durch einen speziellen Autostereoskopen Adaptions-Coder (AAC) in Echtzeit umcodiert werden, sodaß das rechte Auge immer nur die zum rechten Bild gehörenden Farbwerte sieht und das linke Auge die zum linken Bild gehörenden.

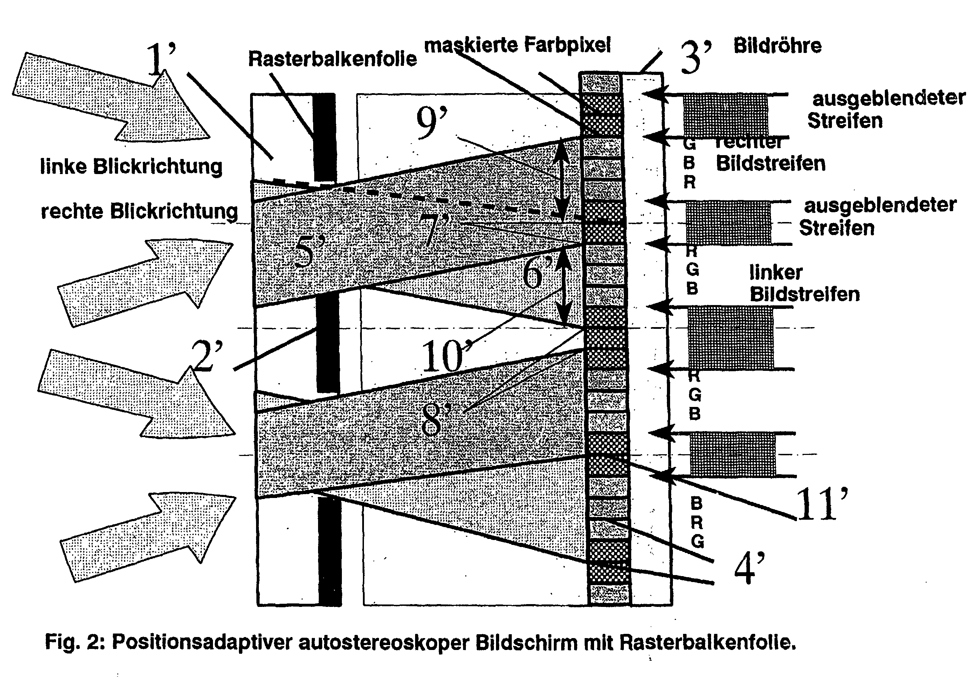

Dabei ist es zulässig, daß sich die Farbreihenfolge der zu einem Pixel gehörenden Farbsubpixel ändert. Zu den drei Farbwerten (RGB) kann noch ein nicht emitierender Teil (z.B. ein Verdrahtungskanal in einem Display), d.h. ein nicht ansteuerbares schwarzes Subpixel (anderer Größe) hinzukommen, wie in Fig. 1 durch die schwarze Leerposition (12) gezeigt. Es gibt aber auch Displays oder Panels, in denen diese horizontalen Leerstellen nicht auftreten, d.h. bei denen sich die Subpixel benachbarter Pixel sich lückenlos anschließen. Ein solcher Bildschirm ist in Fig. 2 zugrunde gelegt.

Die o.g. Problemstellung wird erfindungsgemäß nach Anspruch 1 bzw. 6 dadurch gelöst, daß in einer bekannten Anordnung aus Prismenrasterscheibe und Bildschirm die angesteuerten rechten und linken Bildpunkte in der Lage und Farbreihenfoge adaptiv umcodiert werden. Der Autostereoskope Adaptions-Coder (AAC) ordnet dabei die Farbwerte der Bildpunkte des rechten und linken Bildes den auf dem Bildschirm darzustellenden Farbsubpixeln neu zu. Auf dem Bildschirm selbst werden horizontal abwechselnd (verkämmt) rechte und linke Bildpunkte dargestellt. Die genaue horizontale Lage ist dabei positionsadaptiv: zwischen dargestellten rechten und linken Bildpunkten werden jeweils schwarz angesteuerte Farbsubpixel plaziert. Die jeweils erforderliche Anzahl schwarz zu steuernder Farbsubpixel wird im AAC aufgrund der aktuellen Betrachterposition ermittelt.

Die vom Coder AAC vorgenommene Zuordnung der linken und rechten Bildpunktwerte $\underline{P}_L(i) = [R_L(i), G_L(i), B_L(i)]$ bzw. $\underline{P}_R(i) = [R_R(i), G_R(i), B_R(i)]$ zu den Bildpunkten $\underline{P}_D(k) = [R_D(k), G_D(k), B_D(k)]$ des darstellenden Bildschirms (bzw. Displays) wird anhand des folgenden Beispiels näher erläutert. Dabei können die einzelnen Farbpunkte $R_L(i)$ etc. digital Zahlenwerte von 0 bis 255 annehmen. Der durch die Prismenrasterscheibe verursachte Sichtübergang von links nach rechts und anschließend wieder von rechts nach links findet im Bildpunkt "$\underline{P}_D(k)$" statt gleich bei Beginn des Farbsubpixels "$R_D(k)$" und der nächste zwischen " $G_D(k+1)$" und "$B_D(k+1)$". Dann wird folgende Zuordnung vorgenommen:

$$P_D(k) = [R_D(k), G_D(k), B_D(k)] = [S, G_R(i), B_R(i)]$$

$$P_D(k+1) = [R_D(k+1), G_D(k+1), B_D(k+1)] = [R_R(i), S, S]$$

$$\underline{P}_D(k+2) = [R_D(k+2), G_D(k+2), B_D(k+2)] = [R_L(i), G_L(i), B_L(i)]$$

S bedeutet dabei "Schwarz", was in der Regel dem digitalen Zahlenwert "0" entspricht. Diese Zuordnung der Bildpunkte wird in Fig. 1 veranschaulicht, die Lichtführung in den Strahlengängen (5) und (6) mit den dahinter liegenden Bildschirmsubpixeln ebenfalls. Im Unterschied zu Fig. 1, bei der der Strahlengang für einen idealen Betrachterabstand gezeigt wird, ist in Fig. 2 anstelle einer Prismenrasterscheibe (1, 2) eine Rasterbalkenfolie (1') eingesetzt, die zur gleichen Pixelzuordnung führt, aber nur die halbe Lichtausbeute ermöglicht. Der in Fig. 2 eingetragene Strahlengang ist für eine vom idealen Betrachterabstand abweichende Position eingetragen. Dadurch treten bei einer fehlerfreien Darstellung, d.h. bei einer übersprechfreien Lichtübertragung, nicht nutzbare Sichtübergangsbereiche (7'), (8') auf, in denen entweder beide Augen dieselben Bildschirmpunkte (7') sehen, oder die aus keiner Blickrichtung sichtbar sind (8'). Die in diesen Übergangsbereichen liegenden Bildschirmsubpixel (11') werden auf "schwarz" gesetzt. Diese nicht angesteuerten Farbsubpixel sind in den Fig. 1 und 2 kariert gekennzeichnet, während durchweg nicht emitierende Bereiche des Bildschirms (12) schwarz gekennzeichnet sind. Das Ausblenden der Übergangsbereiche wird durch eine Abstandspositionsadaption ermöglicht - in bestimmten Grenzen. Der Adaptionsbereich für die Abstandsposition des Betrachters ist umso größer je größer der Pitchabstand der Balkenrasterung gegenüber dem doppelten Pixelabstand auf dem Bildschirm gewählt wird. Befindet sich ein Betrachter ständig in der Nähe des idealen Betrachtungsabstandes, reicht es aus, im Mittel nur jedes vierte Subpixel des Bildschirms auszublenden.

Sowohl die Position des Übergangs als auch die genaue Anzahl der schwarz zu steuernden Farbsubpixel wird dabei von der Betrachterposition abhängig, derart daß in jeder linken bzw. rechten sichtbaren Spalte genau drei verschiedenfarbige Farbsubpixel angesteuert werden können. Dieser Codiervorgang ist in jeder Pixelreihe zu wiederholen, wobei sich von Reihe zu Reihe die Position der schwarz zu steuernden Farbsubpixel geringfügig verschieben kann.

Damit ist die im AAC vorzunehmende Codierung im Prinzip festgelegt. Eine genauere Ausführungsbeschreibung wird an anderer Stelle vorgenommen.

Das gleiche adaptive Codierverfahren ist anwendbar, wenn anstelle der Prismenrasterscheibe Schattenbalkenraster bzw. ein vertikales Barrierebalkenraster eingesetzt wird - wie es Fig. 2 zeigt . Ungünstiger dabei ist die Lichtausbeute. Auch der erforderliche Mindestbetrachtungsabstand steigt geringfügig, damit die vertikale Linienstruktur nicht mehr sichtbar ist.

Bei der Dimensionierung ist darauf zu achten, daß der horizontale Pitchabstand des Prismenrasters groß genug ist, damit auch bei der Positionsadaption der Betrachterabstand vom Bildschirm genügend kompensiert werden kann. Denn der nicht nutzbare Überdeckungs- bzw. nicht sichtbare Leerbereich verschwindet nur bei einem einzigen Betrachtungsabstand, der in einer Grundeinstellung wählbar ist - durch den Abstand der Rasterscheibe von der Bildschirmoberfläche. Diese nicht nutzbaren Farbsubpixelstreifen müssen schwarz gesteuert werden. Der Adaptionsbereich für den Betrachtungsabstand ist um so größer, je mehr Farbsubpixel im Überschneidungsbereich zur Verfügung stehen. In der vorgewählten Abstandsgrundposition sollten etwa zwei Farbsubpixel zur Positionsadaption zur Verfügung stehen.

Als Positionsdetektoren eignen sich Infrarot-Head Tracking Systeme, die heute bereits die erforderliche Präzision aufweisen, aber auch preisgünstige Ultraschallsysteme sind verwendbar. Möchte man auch die vertikale Position und den Betrachtungsabstand detektieren, so empfiehlt es sich, mindestens zwei Sensorfelder einzusetzen. Es können aber auch CCD-Kameras mit einer schnellen Bildauswertung eingesetzt werden. Ultraschallvermessungen sind dann besonders einfach, wenn der Sender am Kopf des Betrachters angebracht werden darf.

BESCHREIBUNG DER EINSATZGEBIETE FÜR DEN PERSONENADAPTIVEN AUTOSTEREO-SKOPEN MONITOR PAM: Ein autostereoskoper Bildschirm hat gegenüber anderen Methoden wie Shutterprinzip oder Polarisationsprinzip mit Brillen den Vorteil, daß der Benutzer keine Brille benötigt. Um den Stereoeffekt aus verschiedenen Blickrichtungen eines Betrachters zu erhalten, wird in bisher bekannten Systemen die Linsen- bzw. Prismenscheibe vor der Bildoberfläche mechanisch adaptiv, der Betrachterposition entsprechend, nachgeführt. Daneben ist ein autostereoskoper Shutter Bildschirm bekannt, für den aber die dafür erforderliche schnelle Displaytechnologie zur Zeit noch nicht ganz ausgereift ist. Hingegen verwendet der in diesem Beitrag vorgestellte Positionsadaptive Autostereoskope Monitor PAM nur verfügbare Komponenten und Technologien.

Die autostereoskope Nutzung bleibt im wesentlichen auf eine Person je Bildschirm beschränkt, was aber an Workstations oder im Operationssaal des Arztes ohnehin der Fall ist. Daneben können natürlich jederzeit zusätzlich brillengebundene Verfahren für eine Gruppennutzung eingesetzt werden.

Die wichtigsten kurzfristigen Applikationen sind in der Medizintechnik zu sehen. Hier ist der Bezug auf eine Person auch kein Nachteil; ohnehin beurteilt nur eine Person ein 3D-CT-Bild: der Arzt, der störende Brillen und eingeschränkte Blickfelder vermeiden muß. Sind mehrere Ärzte gleichzeitig tätig, so können mehrere Bildschirme benutzt werden. Will gleichzeitig ein Auditorium eine mikrochirurgische Operation stereoskop mitverfolgen, so kann dies über ein Projektionsverfahren mit z. B. polarisiertem Licht erfolgen.

In einem zukünftigen digitalen Fernsehsystem wird auch das stereoskope Fernsehen seinen Platz haben, da es einfach den natürlichen Sehgewohnheiten am nächsten kommt und optional nutzbar sein kann, wenn die digitale Codierung bei der Übertragung die Zusatzinformation für die dritte Dimension mitliefert. Werden preisgünstigere Flachbildschirme auf dem Markt sein, ist die Aufrüstung zu einem PAM-System leicht möglich .

Schließlich ist das heute mit viel Investitionen bedachte Gebiet der Flugsimulation und -navigation als Einsatzgebiet zu nennen, da auch die großflächige autostereoskope Darstellung personenbezogen möglich ist.

**Literatur**

[1] *S.Hentschke:* Stereoskoper Bildschirm. Patentschrift DE-A-41 14 023.0 (1991).

[2] *R. Börner:* Autostereoscopic 3-D Imaging by Front and Rear Projection and on Flat Panel Displays. Displays, Vol. 14, No.1 (1993), pp. 39-46.

[3] *Sheat D E, Chamberlin G R, Gentry P, Leggat JS, McCartney DJ:* 3-D Imaging Systems for Telecommunications Applications. Proc. SPIE, Vol. 1669, p.186. Electronic Imaging Systems and Applications Meeting, San José (1992)

[4] *S.Hentschke, A.Herrfeld, C.Junge, R.Kothe:* Stereoskope Echtzeitbildverarbeitung. CeBIT Exponat und Broschüre (1994).

[5] *H.P.Mainzer, K.Meetz, D.Scheppelmann, U.Engelmann, H.J.Bauer:* The Heidelberg Ray Tracing Model. IEEE Computer Graphics and Appl. Nov. 1991 pp.34ff.

[6] *S. Hentschke:* Personenbezogener autostereoskoper Bildschirm. Patentanmeldung P 44 33 058.8 (1994).

[7] *R. Börner:* Autostereoskope Rückprojektions- und Flachbildschirme. Fernsehund Kinotechnik Bd. 48, Nr. 11 (1994). S.594-600.

[8] *S. Hentschke:* Personenadaptiver autostereoskoper Monitor - eine Option für den Fernseher? Fernseh- und Kinotechnische ZeitschriftNr. 5/1996, S. 242-248

[9] *R. Börner:* Wiedergabeeinrichtung für dreidimensionale Wahrnehmung von Bildern. Autostereoscopic Viewing Device for Creating Three Dimensional Perception of Images. Deutsches Patent Nr. DE 3921061- A1. (Anm. 1989).

[10] *Verhulst, A.G.:* Display and pick-up device for stereoscopic picture display: European Patent 0 332 268 (1988)

[11] *S. Hentschke,* Personenadaptiver autostereoskoper Shutter Bildschirm (PAAS). Patentschrift DE 19500315 C, (1995).

[12] *S. Hentschke:* Autostereoskope Bildwiedergabe - eine Option für den Fernseher? 17. FKTG-Tagung, Wien 1996, Tagungsband.

**Patentansprüche**

1. Verfahren zur Ansteuerung eines Positionsadaptiven Autostereoskopen Monitors (PAM), bestehend aus Prismenzylinderrasterscheibe (1, 2) oder einer Schattenlinienrasterscheibe (1', 2') und einem Bildschirm (3, 3'), der eine herkömmliche Farbbildröhre, ein Display oder eine Panel-Rückprojektion sein kann, und bei dem die einzelnen Farbsubpixel (4, 4') eines Bildpunktes horizontal nebeneinander liegen, **gekennzeichnet dadurch, daß** Ansteuersignale für rechte und linke Bildpunkte ($\underline{P}_R$, $\underline{P}_L$) auf dem Bildschirm (3, 3') betrachter positionsadaptiv pixelweise derart umcodiert werden, daß 1, 2 oder mehr zusammenhängende Farbsubpixel, die den von einer rechten Blickrichtung (5') und einer linken Blickrichtung (6') sichtbaren Überschneidungsbereich (7') des Bildschirms überdecken, und diejenigen Farbsubpixel, die einen nicht sichtbaren Leerbereich (8') überdecken, dunkel, bzw. schwarz, gerteuert werden und daß aus jedem nur von rechter Blickrichtung (9') bzw. nur von linker Blickrichtung (10') auf dem Bildschirm sichtbaren Bereich eine Gruppe mit jeweils genau drei zusammenhängenden verschiedenfarbigen Farbsubpixeln R,G,B ausgewählt wird, wobei die Gruppen für die rechte und die linke Blickrichtung untereinander räumlich verkämmt sind, und wobei es bei den auf dem Bildschirm nebeneinander angesteuerten drei Farbsubpixeln einer Gruppe für rechts bzw. links nicht auf deren Farbreihenfolge ankommt, d. h. statt $R_L,G_L,B_L$) (Rot, Grün, Blau) kann auch innerhalb eines rechten bzw. linken Streifens dargestellt werden $G_L,B_L,R_L$ oder $B_L,R_L,G_L$.

2. Verfahren nach Anspruch 1 , **gekennzeichnet dadurch, daß** ein Autostereoskoper Adaptions-Coder (AAC) vorgesehen ist, der die von der Betrachterposition abhängige Umcodierung der Ansteuersignale entsprechend der räumlichen Verkämmung in Echtzeit vornimmt - entsprechend vorgegebener oder laufend im Abstand von etwa 10 bis 20 ms aktualisierter detektierter Positionsdaten der Betrachterposition.

3. Verfahren nach Anspruch 1 oder 2 , **gekennzeichnet dadurch, daß** der Abstand der Prismenzylinderrasterscheibe (1) oder der Schattenlinienrasterscheibe (1') vom Bildschirm (3) einstellbar ist, z.B. für 1m, 1,50m oder 2m als idealen Betrachterabstand, sodaß anfangs eine Grundeinstellung für einen mittleren Betrachtungsabstand eingestellt werden kann, an dem sich dann der Adaptionsalgorithmus orientiert.

4. Verfahren nach Anspruch 1 , **gekennzeichnet dadurch, daß** der Adaptionsbereich vergrößert wird, indem die Bildschirmgröße gegenüber der Rasterscheibe verkleinert wird, was beispielsweise bei einer Panelrückprojektion durch Verändern des Projektionsabstands erzielt werden kann.

5. Verfahren nach Anspruch 1 , **gekennzeichnet dadurch, daß** der Autostereoskope Adaptions-Coder automatisch trainiert wird, indem zwei Kameras im Augenabstand mittels einer geeigneten Trainingssequenz die positionsabhängige Umcodierung abspeichern.

6. Positionsadaptiver Autostereoskoper Monitor (PAM) mit einem Bildschirm (3, 3'), der eine herkömmliche Farbbildröhre, ein Display oder ein Panel-Rückprojektor sein kann, und bei dem die einzelnen Farbsubpixel (4, 4') horizontal nebeneinander liegen, und mit einer Prismenzylinderrasterscheibe (1, 2) oder einer Schattenlinsenrasterscheibe (1', 2'), **gekennzeichnet durch** Mittel (AAC) zur Durchführung des Verfahrens nach einem der Ansprüche 1 bis 5.

**Claims**

1. Method for controlling a position-adaptive auto-stereoscopic monitor (PAM) comprising a lenticular prism grid (1, 2) or a barrier stripe grid (1', 2') and an image screen (3, 3'), which can be a conventional colour image tube, a display or a panel back projection, and in which the individual colour sub-pixels (4, 4') of an image pixel lie horizontally beside one another, **characterised in that** control signals for right and left image pixels (P$_R$, P$_L$) viewed on the image screen (3, 3') are translated into pixels in a position-adaptive manner in such a way that 1, 2 or more contiguous colour sub-pixels, which cover the overlapping area (7') of the image screen visible from a right viewing direction (5') and from a left viewing direction (6'), and those colour sub-pixels which cover a non-visible empty region (8') are controlled dark or black, and **in that** from each area visible on the image screen only from the right viewing direction (9') or only from the left viewing direction (10') a group is selected which has exactly three contiguous differently coloured sub-pixels R, G, B, the groups for the right and left viewing directions being spatially interlaced with one another, and the colour sequence of the three colour sub-pixels of a group controlled beside one another on the image screen not being significant, i.e. instead of $R_L,G_L,B_L$ (Red, Green Blue), $G_L,B_L,R_L$ or $B_L,R_L,G_L$ can also be represented within a right-hand or left-hand stripe.

2. Method according to claim 1, **characterised in that** an autostereoscopic adaptation coder (AAC) is provided which undertakes the transcoding, dependent on the viewer's position, in real time of the control signals according to the spatial interlacing - in accordance with predetermined position data of the viewer's position or detected position data continuously up-dated at time intervals of approximately 10 to 20 ms.

3. Method according to claim 1 or 2, **characterised in that** the distance of the lenticular prism grid (1) or of the barrier stripe grid (1') from the image screen (3) is adjustable, e.g. for 1m, 1.50m or 2m as the ideal viewing distance, such that a basic setting for an average viewing distance can be set initially, on which the adaptation algorithm is then based.

4. Method according to claim 1, **characterised in that** the adaptation area is enlarged by the size of the image screen being reduced in relation to the grid, which can be achieved for example in the case of a panel back projection by altering the projection distance.

5. Method according to claim 1, **characterised in that** the autostereoscopic adaptation coder is automatically trained by two cameras, at the same spacing as the eyes, storing the position-dependent transcoding by means of a suitable training sequence.

6. Position-adaptive autostereoscopic monitor (PAM) having an image screen (3, 3'), which can be a conventional colour image tube, a display or a panel back projector, and in which the individual colour sub-pixels (4, 4') lie horizontally beside one another, and having a lenticular prism grid (1, 2) or a barrier stripe grid (1', 2'), **characterised by** means (AAC) for implementing the method according to one of claims 1 to 5.

**Revendications**

1. Procédé pour la commande d'un moniteur autostéréoscopique à adaptation de position (PAM) composé d'un réseau prismatique (1, 2) ou d'un réseau à lignes sombres (1', 2') et d'un écran (3, 3') qui peut être un tube image en couleurs, un écran plat ou un écran de rétroprojection, dans lequel les différents sous-pixels chromatiques (4, 4') d'un point d'image sont adjacents horizontalement, **caractérisé par le fait que** des signaux de commande pour les points d'image droits et gauches ($\underline{P}_R$, $\underline{P}_L$) sont recodés pixel par pixel de manière adaptée sur l'écran (3, 3') à la position de l'observateur de telle sorte que 1, 2 ou plusieurs sous-pixels chromatiques contigus qui recouvrent la zone de chevauchement (7') de l'écran visible d'une direction de visée droite (5') et d'une direction de visée gauche (6') ainsi que les sous-pixels chromatiques qui recouvrent une zone vide (8') non visible sont obscurcis ou mis à noir, et que dans toute zone visible sur l'écran seulement d'une direction de visée droite (9') ou seulement d'une direction de visée gauche (10') il est sélectionné un groupe d'exactement trois sous-pixels chromatiques contigus de couleur différente R, V, B, les groupes pour les directions de visée droite et gauche étant spatialement entrelacés et l'ordre des couleurs étant sans importance pour les trois sous-pixels chromatiques d'un groupe commandés simultanément sur l'écran pour le côté droit ou gauche, c'est-à-dire qu'au lieu de $R_L$, $V_L$, $B_L$ (rouge, vert, bleu), $V_L$, $B_L$, $R_L$ ou $B_L$, $R_L$, $V_L$ peut être représenté au sein d'une bande droite ou gauche.

2. Procédé selon la revendication 1, **caractérisé par le fait qu'**il est prévu un codeur d'adaptation autostéréoscopique (AAC) qui réalise en temps réel le recodage en fonction de la position de l'observateur des signaux de commande selon l'entrelacement spatial - selon des données de position de l'observateur prédéfinies ou détectées et actualisées en continu à intervalles d'environ 10 à 20 ms.

3. Procédé selon la revendication 1 ou 2, **caractérisé par le fait que** la distance du réseau prismatique (1) ou du réseau à lignes sombres (1') à l'écran (3) est réglable, p. ex. pour une distance idéale de l'observateur de 1 m, 1,50 m ou 2 m, de manière à permettre un réglage de base initial pour une distance de l'observateur moyenne qui sera prise pour référence par l'algorithme d'adaptation.

4. Procédé selon la revendication 1, **caractérisé par le fait que** la plage d'adaptation est agrandie en réduisant la taille de l'écran par rapport au réseau, ce que l'on peut obtenir par exemple avec un écran de rétroprojection en modifiant la distance de projection.

**5.** Procédé selon la revendication 1, **caractérisé par le fait que** le codeur d'adaptation autostéréoscopique effectue un apprentissage automatique consistant en ce que deux caméras séparées de la distance entre les yeux enregistrent le codage en fonction de la position au moyen d'une séquence d'apprentissage appropriée.

**6.** Moniteur autostéréoscopique à adaptation de position (PAM) équipé d'un écran (3, 3') qui peut être un tube image en couleurs, un écran plat ou un écran de rétroprojection, dans lequel les différents sous-pixels chromatiques (4, 4') sont adjacents horizontalement, et d'un réseau prismatique (1, 2) ou d'un réseau à lignes sombres (1', 2'), **caractérisé par** des moyens (AAC) de réalisation du procédé selon l'une des revendications 1 à 5.

TFT Display

ausgeblendeter Streifen

G rechter
B Bildstreifen
R

ausgeblendeter Streifen

R linker
G Bildstreifen
B

G B R

B R G

Prismenrasterscheibe

3 5 6 11 12 4

1 2

linke Blickrichtung

rechte Blickrichtung

Fig.1: Positionsadaptiver autostereoskoper Bildschirm mit Prismenrasterscheibe. Horizontaler Schnitt, stark vergrößert mit skizziertem Lichtverlauf.

**Fig. 2: Positionsadaptiver autostereoskoper Bildschirm mit Rasterbalkenfolie.**

EP 0 836 332 B1